(19) Europäisches Patentamt
European Patent Office
Office européen des brevets

(11) **EP 4 699 962 A1**

(12) **EUROPEAN PATENT APPLICATION**

(43) Date of publication:
**25.02.2026 Bulletin 2026/09**

(21) Application number: **24196006.1**

(22) Date of filing: **22.08.2024**

(51) International Patent Classification (IPC):
**B65G 15/08** *(2006.01)*   **B65G 43/00** *(2006.01)*
**B65G 43/02** *(2006.01)*   **G05B 19/418** *(2006.01)*
**G06V 10/00** *(2022.01)*   **G05B 9/00** *(2006.01)*

(52) Cooperative Patent Classification (CPC):
**B65G 43/00; B65G 15/08; B65G 43/02;**
B65G 2203/041; B65G 2207/40; B65G 2207/48;
G05B 19/4184; G06V 2201/06

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Innomotics GmbH**
**90441 Nürnberg (DE)**

(72) Inventors:
• **Das, Rik**
**834001 Ranchi, Jharkhand (IN)**
• **K S, Raghunandan**
**570023 Mysore, Karnataka (IN)**

• **LOHIA, SURYAVI**
**285205 Jalaun (IN)**
• **PASUPULETI, SRIKANTH**
**532005 Srikakulam, Andhra Pradesh (IN)**
• **Kumble, Naren**
**574239 Sullia, Karnataka (IN)**
• **Nutalapati, Gangadharam**
**560078 Bangalore, Karnataka (IN)**
• **Ramdurg, Ujwal**
**560078 Bengaluru (IN)**
• **Singh, Himanshu Kumar**
**560100 Bangalore (IN)**

(74) Representative: **Michalski Hüttermann & Partner
Patentanwälte mbB
Kaistraße 16A
40221 Düsseldorf (DE)**

(54) **METHOD AND SYSTEM FOR DETERMINING A STATE OF A ROLLER-CONVEYER**

(57)    A method (300) and a system (100) for determining a state of a roller-conveyor system (101), are disclosed. In one embodiment, the method includes receiving images corresponding to a roller-mount (101A, 101B, 101C, 101D, ..., 101N) of the roller-conveyor system (101); selecting an image depicting at least one roller (200) mounted on the roller-mount in the image; identifying the roller (200) in the selected image and annotating the at least one roller (200) to determine a size and an orientation of the at least one roller (200); determining a deviation in the at least one of the size and the orientation of the at least one roller (200) with respect to a preset size and a preset orientation, respectively, in a trained machine learning model; and identifying misalignment of the at least one roller (200) based on the deviation.

FIG. 1A

EP 4 699 962 A1

**Description**

TECHNICAL FIELD OF THE DISCLOSURE

The present disclosure relates to conveyor systems. More particularly, the present disclosure relates to a method and system for determining a state of a roller-conveyor system utilized in various industrial applications for the transportation of materials, goods, or products along a designated path.

BACKGROUND

In modern industrial processes associated with manufacturing plants, conveyor systems offer a cost-effective and streamlined means of material handling. Typically, conveyor systems employ conveyor rollers adapted to facilitate the smooth movement of goods along a designated path of the conveyor system. With prolonged use, some of the conveyor rollers may be subject to misalignment, failure, theft, and the like. Identification of faults related to the conveyor rollers is a significant step towards maintaining consistent performance of the manufacturing plants and ensuring the safety of workers. This is because, the occurrence of conveyor roller faults can lead to disruptions in production, escalate maintenance costs, and even pose safety hazards to personnel and equipment.

Conventional approaches to identifying the faults may be broadly categorized as manual and automated. Manual inspection may be carried out by inspection in person and by exploring with practical experience, the abnormalities in visual, thermal, or sound signatures exhibited by the conveyor rollers during runtime. The process is time-consuming, tedious, and unsafe for the inspecting personnel since the process demands close physical inspection of each roller of the conveyor system.

To mitigate these challenges, various efforts have been made to implement automated conveyor roller fault monitoring systems. These existing monitoring systems typically utilize a combination of sensors and data analysis techniques to detect faults in conveyor rollers and trigger appropriate responses. Despite advancements in this field, several drawbacks are associated with the current state of conveyor roller fault monitoring systems.

Ultrasonic sensing is used, as an inspection process, to detect roller failure. The inspection process performs ultrasonic recording on rollers with and without any discernable anomaly. The dataset thus created is used to train a random forest classifier and a multilayer perceptron to perform prediction on the test cases. The vast amount of data generated by these monitoring systems, coupled with the complexity of data analysis and interpretation, poses another challenge.

In another approach, vibration sensors are employed to supervise vibration generated by misalignment of the rollers. However, it has been observed that supervising all rollers using vibration sensors may be accident-prone for conveyors of large sizes and due to the handling of rotating equipment of moving conveyors. Conventionally, the aforesaid problem has been addressed with an inspection robot capturing acoustic signals. However, the movement of the robot causes sound disturbances which create attenuation in automatic detection of the fault in certain cases.

Certain other conventional approaches describe the use of distributed optical fibre sensors for long-distance monitoring of faults. Designing the framework for fault detection is performed by combining and adjusting an Isolation Forest technique for investigating optical signals representing defective rollers. Yet other conventional approaches apply an acceleration sensor to collect the vibration signals of multiple rollers that are further disintegrated using wavelet packet decomposition and further classified using a support vector machine (SVM). Defining statistical features of the rollers for training a decision tree classifier to classify the test cases for fault detection has also been explored in another conventional approach. Such existing conventional approaches highlight the acoustic-based fault detection processes which involve the installation of expensive sensors.

Considering these identified limitations, there exists a need for an improved monitoring system that addresses these drawbacks and provides a comprehensive, accurate, and adaptable solution for fault detection in conveyor rollers.

SUMMARY AND DESCRIPTION

Therefore, it is the object of the present disclosure to provide a system and a method for determining the state of a roller-conveyor system.

This summary is provided to introduce a selection of concepts, in a simplified format, that are further described in the detailed description. This summary is neither intended to identify key or essential inventive concepts of the present disclosure nor is it intended to determine the scope of the present disclosure.

The scope of the present disclosure is defined solely by the appended claims and is not affected to any degree by the statements within this summary. The present embodiments may obviate one or more of the drawbacks or limitations in the related art.

The object of the present disclosure is achieved by a method for determining a state of a roller-conveyor system. The method includes receiving a plurality of images corresponding to a roller-mount of the roller-conveyor system. Advantageously, the plurality of images may be captured using an image capturing device that is either stationary or mobile relative to the roller-conveyor system. If the images are captured using a mobile image capturing device, less number of image capturing devices are used thereby reducing the cost of implementing the solution. The method further includes selecting an image, from the plurality of images, depicting at least one roller mounted on the roller-mount in the image. Furthermore, the method includes identifying the at least one roller in the selected image and annotating the at least one roller to determine a size and an orientation of the at least one roller. Moreover, the method includes determining a deviation in the at least one of the sizes and the orientation of the at least one roller with respect to a preset size and a preset orientation, respectively, in a trained machine learning model.

The training model in combination with the image capturing devices eliminates the need for manual inspection of the images to determine the misaligned at least one roller. Advantageously, the training model reduces the time consumed in identifying the misaligned at least one roller. Moreover, the training model allows remote monitoring of the roller-conveyor system. Consequently, the misalignment of the at least one roller may be identified based on the deviation, such that the misaligned at least one roller is indicative of a misaligned state of the roller-conveyor system.

In an embodiment, selecting the image includes processing each image, from the plurality of images, using an image processing technique to detect the at least one roller. Moreover, for each processed image, a size of the at least one roller is determined and compared to the size with respect to a predetermined value. Consequently, the image is selected, from the plurality of images, if the determined size of the at least one roller is greater than the predetermined value. Such a processing ensures that the images of the complete rollers is used for image processing.

In an embodiment, the method includes processing a plurality of predetermined portions of the selected image corresponding to a known position of the at least one roller in the image. Moreover, the method includes checking presence of the at least one roller in each of the plurality of predetermined portions. Such a processing ensures that only a portion of the image is analyzed instead of the complete image to ensure saving the processing resource.

In an embodiment, analysing the determined size and orientation of the at least one roller includes determining a first deviation between the determined size and the preset size and comparing the first deviation with a first threshold value. Moreover, a second deviation is determined between the determined orientation and the preset orientation and comparing the second deviation with a second threshold value. Consequently, the at least one roller is determined as misaligned when at least one of the first deviation and the second deviation exceeds the first threshold value and the second threshold value, respectively.

In an embodiment, the method includes receiving a plurality of training images corresponding to a roller-mount. Moreover, the method includes processing each of the plurality of training images to identify one or more rollers using an image processing technique. Furthermore, the method includes annotating each identified roller in each of the plurality of training images. The method also includes determining a size and orientation of each identified roller based on the annotation. Consequently, the machine learning model is trained based on the orientation and size of each identified roller in the plurality of training images. Training on the model helps in developing a robust model for accurately detecting the misalignment.

In an embodiment, annotating each identified roller includes adding a boundary box around each identified roller in each of the plurality of training images, such that the training includes training the machine learning model based on the orientation and size of the boundary box of each identified roller in the plurality of training images.

In an embodiment, determining the size includes determining a perimeter and an area of the boundary box.

In an embodiment, determining the orientation includes identifying a principal axis of the boundary box and determining an angle of inclination of the principal axis with a reference axis.

In an embodiment, determining the orientation further includes determining a position of the boundary box of the at least one roller in the image. Consequently, the at least one roller is categorized as one of an upper roller, a top-side roller, a low-side roller, and a lower roller based on the position and the orientation of the boundary box.

The object of the present disclosure is also achieved by a system for determining a state of a roller conveyer system. The system includes an image capturing device adapted to capture a plurality of images corresponding to a roller-mount of the roller-conveyor system. Moreover, the system includes a processor coupled to the image capturing device. The processor is adapted to receive the plurality of images. Moreover, the processor selects an image, from the plurality of images, depicting at least one roller mounted on the roller-mount in the image. Also, the processor identifies the at least one roller in the selected image and annotates the at least one roller to determine a size and an orientation of the at least one roller.

Furthermore, the processor determines a deviation in the at least one of the sizes and the orientation of the at least one roller with respect to a preset size and a preset orientation, respectively, in a trained machine learning model. Consequently, misalignment of the at least one roller is identified based on the deviation, such that the misaligned at least one roller is indicative of a misaligned state of the roller-conveyor system.

In an embodiment, the processor of the system is also adapted to process each image, from the plurality of images, using an image processing technique to detect the at least one roller. Moreover, the processor determines, for each processed image, the size of the at least one roller and compares the size with respect to a predetermined value. Consequently, the processor selects the image, from the plurality of images, if the determined size of the at least one roller is greater than the predetermined value.

In yet another embodiment, the processor of the system is adapted to determine a first deviation between the determined size and the preset size and compares the first deviation with a first threshold value. Moreover, the processor determines a second deviation between the determined orientation and the preset orientation and compares the second deviation with a second threshold value. Consequently, the processor determines that the at least one roller is misaligned when at least one of the first deviation and the second deviation exceeds the first threshold value and the second threshold value, respectively.

In another embodiment, the processor of the system is adapted to receive a plurality of training images corresponding to a roller-mount. Furthermore, the processor is adapted to process each of the plurality of training images to identify one or more rollers using an image processing technique. Moreover, the processor is adapted to annotate each identified roller in each of the plurality of training images. The processor is also adapted to determine the size and orientation of each identified roller based on the annotation. Consequently, the processor trains the machine learning model based on the orientation and size of each identified roller in the plurality of training images.

In another embodiment, the processor of the system is adapted to add a boundary box around each identified roller in each of the plurality of training images, such that the training includes training the machine learning model based on the orientation and size of the boundary box of each identified roller in the plurality of training images.

In yet another embodiment, the plurality of images is received in the form of a video feed.

BRIEF DESCRIPTION OF THE DRAWINGS

The above-mentioned and other features of the disclosure will now be addressed with reference to the accompanying drawings. The illustrated embodiments are intended to illustrate, but not limit the disclosure.

The present disclosure is further described hereinafter with reference to illustrated embodiments shown in the accompanying drawings, in which:

FIG. 1A is a schematic representation of a system for determining a state of a roller-conveyor system, according to an embodiment.

FIG. 1B is a schematic representation of a shuttle having a plurality of the image capturing device installed over the roller-conveyor system, according to an embodiment.

FIG. 2A is a diagrammatic representation illustrating identification of a roller mount, according to an embodiment.

FIG. 2B is a diagrammatic representation illustrating a keyframe selection of the roller mount, according to an embodiment.

FIG. 3 is a process flowchart illustrating an exemplary method for determining a state of a roller-conveyor system, according to an embodiment.

DETAILED DESCRIPTION

Various embodiments are described with reference to the drawings, wherein like reference numerals are used to refer the drawings, wherein like reference numerals are used to refer to like elements throughout. In the following description, for the purpose of explanation, numerous specific details are set forth in order to provide a thorough understanding of one or more embodiments. It may be evident that such embodiments may be practised without these specific details.

Throughout the specification, the terms system for determining a state of a roller-conveyor system' and 'system' mean the same. Also, the terms method for determining a state of a roller-conveyor system' and 'method' mean the same.

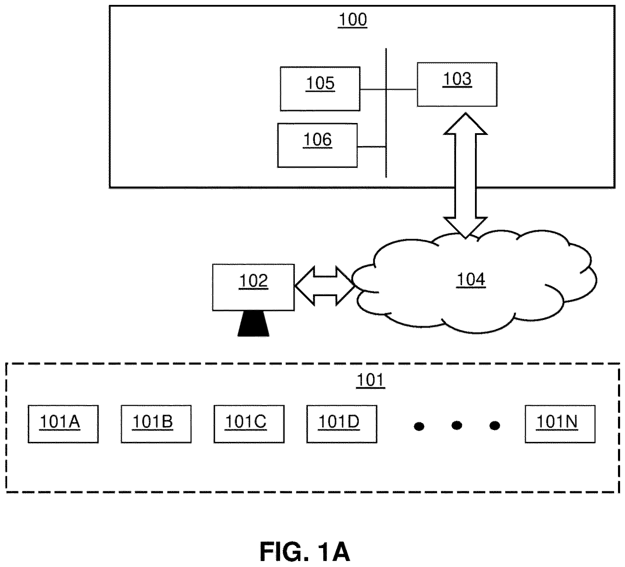

FIG. 1A is a schematic representation of a system 100 for determining a state of a roller-conveyor system 101, according to an embodiment. The system 100 includes an image capturing device 102 adapted to capture a plurality of images corresponding to a roller-mount 101A, 101B, 101C, 101D, ..., 101N of the roller-conveyor system 101. In an embodiment, the image capturing device 102 may be a part of the system 100 or may be an auxiliary sub component of the system 100. Moreover, the system 100 includes a processor 103 coupled to the image capturing device 102. The processor 103 is adapted to receive the plurality of images. In an embodiment, the image capturing device 102 transmits the plurality of images to the processor 103 via a communications network 104. The processor 103 may also be operatively coupled to a memory unit 105.

The communications network 104 may include, but is not limited to, a Wide Area Network (WAN), a cellular network, such as a 3G, 4G, or 5G network, an Internet-based mobile ad hoc networks (IMANET), etc. The communications network 104 may also include wired media such as a wired network or direct-wired connection, and wireless media such as acoustic, radio frequency (RF), microwave, infrared (IR), bluetooth low energy (BLE) networks, and other wireless media.

In an exemplary embodiment, the processor 103 may include one or more processors/controllers that may be operatively coupled to one or more I/O interfaces, a memory unit 105, and a plurality of modules 106. In one embodiment, the processor 103 may include at least one data processor for executing processes in a Virtual Storage Area Network. The processor 103 may include specialized processing units such as integrated system (bus) controllers, memory management control units, floating point units, graphics processing units, digital signal processing units, etc. In one embodiment, the processor 103 may include a Central Processing Unit (CPU), a Graphics Processing Unit (GPU), or both.

The processor 103 may be one or more general processors, digital signal processors, application-specific integrated circuits, field-programmable gate arrays, servers, networks, digital circuits, analog circuits, combinations thereof, or other now known or later developed devices for analyzing and processing data. The processor 103 may execute a software program, such as code generated manually (i.e., programmed) to perform the desired operation. In an embodiment of the present disclosure, the processors/controllers may be a general purpose processor, such as the CPU, an Application Processor (AP), or the like, a graphics-only processing unit such as the GPU, a Visual Processing Unit (VPU), and/or an Artificial Intelligence (AI)-dedicated processor, such as a Neural Processing Unit (NPU).

Further, the processor 103 controls the processing of input data in accordance with a predefined operating rule or machine learning (ML) model stored in the memory unit 105 that may include at least one of a non-volatile memory and a volatile memory. The predefined operating rule or the ML model is provided through training or learning. Here, being provided through learning means that, by applying a learning technique to a plurality of learning data, a predefined operating rule or the ML model of a desired characteristic is made. The learning may be performed in a device itself in which ML according to an embodiment is performed, and/or may be implemented through a separate server/system.

Furthermore, the ML model may consist of a plurality of neural network layers. Each layer has a plurality of weight values and performs a layer operation through the calculation of a previous layer and an operation of a plurality of weights. Examples of neural networks include, but are not limited to, Convolutional Neural Network (CNN), Deep Neural Network (DNN), Recurrent Neural Network (RNN), Restricted Boltzmann Machine (RBM), Deep Belief Network (DBN), Bidirectional Recurrent Deep Neural Network (BRDNN), Generative Adversarial Networks (GAN), and deep Q-network.

The learning technique is a method for training a predetermined target device (for example, the image capturing device 102 coupled to the processor 103) using a plurality of learning data (images of the roller mounts 101A, 101B, 101C, 101D, ..., 101N) to cause, allow, or control the target device to make a determination or prediction. Examples of learning techniques include, but are not limited to, supervised learning, unsupervised learning, semi-supervised learning, or reinforcement learning.

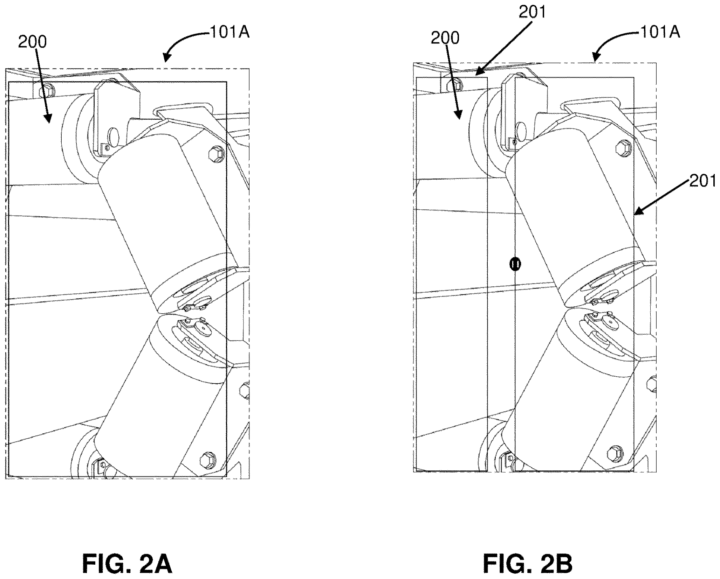

Each of the roller mounts 101A, 101B, 101C, 101D, ..., 101N includes a plurality of rollers 200 as exemplarily illustrated in FIG. 2A. The roller mounts 101A, 101B, 101C, 101D, ..., 101N may each have a hexagonal structure housing six rollers 200. Alternatively, the roller mounts 101A, 101B, 101C, 101D, ..., 101N may be designed to have a suitable geometrical structure such as a pentagonal structure, a triangular structure, or any other polygonal structure. Accordingly, the number of rollers 200 available in such roller mounts 101A, 101B, 101C, 101D, ..., 101N may vary based on the type of geometrical structure of the roller mounts 101A, 101B, 101C, 101D, ..., 101N.

The rollers mounted on the aforementioned roller mounts 101A-101N are cylindrical devices that receive a weight of pipe 202 and rotate about their axis to support the pipe 202 when the pipe 202 is conveyed through the roller-conveyor system 101. The rollers can also have a coating of material, such as rubber to increase friction between the roller and the conveyed pipe 202 and also to reduce chances of scratching and wearing that may be caused by the interaction between the roller and the pipe 202.

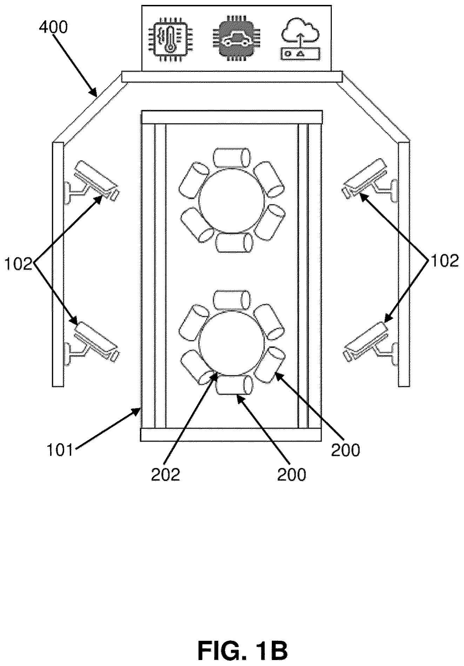

Referring to Fig 1B that shows a schematic representation of a shuttle having a plurality of the image capturing devices installed over the roller-conveyor system. The image capturing device 102 may include one or more image processing sensors or one or more cameras that are mounted on a motorized lightweight shuttle 300 with additional load carrying capacity. In an embodiment, the image capturing devices 102 may be positioned on both sides of the roller-conveyor system 101 such that images from both sides are captured. The images captured from both sides may be provided as a video feed and the provide the video feed as a plurality of images. Further, the video feeds from image capturing devices 102 may be stitched together to form a single video feed for further processing. Stitching the video feeds reduces the load on the system to process the videos separately thereby making the analysis quick. Moreover, the stitched video feed allows for capturing the complete images of the roller mounts 101 which are otherwise not completely captured in a single image capturing device 102. In an embodiment, the image capturing devices 102 captures the video feeds in synchrony so that the video feeds can be correctly stitched to create a single video feed.

The shuttle 300 may use the existing rails of the square cross section that are available on the roller-conveyor system 101 with minimal additions like start and end guide rails. In an embodiment, the shuttle 300 may be designed to support the additional weight of power sources, additional mounted sensors, cameras, and the like. In one embodiment, the additional weight carrying capacity of the shuttle 300 may be between 50kg and 100kg.

In an embodiment, a shuttle drive (not shown) may be provided to generate a back- and-forth movement of the shuttle 300 relative to the roller-conveyor system 101, such that shuttle 300 travels over the rollers 200 and a pipe 202 conveyed by the rollers 200. The shuttle drive may be adapted to move the shuttle 300 in both directions with or without the involvement of gear mechanisms. Since the conveyor sections have turns, the shuttle 300 may include a wheel on rails assembly adapted to safely navigate the turns along the length of the roller-conveyor system 101. During operations, the roller-conveyor system 101 may be subject to continuous vibrations. As such, the shuttle 300 may be stabilized using counterweights to avoid accidental misalignment of the wheels on the rails assembly.

FIG. 2A is a diagrammatic representation illustrating identification of a roller mount 101A from the roller mounts 101A, 101B, 101C, 101D, ..., 101N, according to an embodiment. The processor 103 selects an image, from the plurality of images, depicting at least one roller 200 mounted on the roller-mount 101A, 101B, 101C, 101D, ..., 101N in the image. Firstly, the processor 103 may detect the roller mounts 101 A, 101B, 101C, 101D, ..., 101N on which the rollers 200 are mounted. The identification is carried out using a machine learning technique, for example, YOLO (R) and is tagged with an identifier generated using a Deep Sort technique. Under this technique, d*d dimensions of grid cells are applied to an object in the image, for example, the roller mount 101A, and the grid cell with the centre of the object in it for identification purposes. The rest of the cells are ignored even if they contain some of the object parts. Object detection with the machine learning model initiates with a prediction of B bounding boxes along with their parameters and confidence scores for each of the grid cells. The presence or absence of an object in a bounding box is reflected by the confidence score of the bounding boxes. The confidence score (CS) is calculated as in equation (1)

$$CS = p(Obj) * [IOU]\_pred^{truth} \quad (1)$$

where CS = Confidence Score, p = probability, Obj = Object, IOU = Intersection over union of prediction box and ground truth box.

The confidence score is found to be nearing 0 in case of no objects and should be equal to [IOU] _pred^truth for an identified object. Thus, for each bounding box, there are five parameters, namely, centre coordinates (a,b), width, height, and confidence score.

Furthermore, the deep sort technique predicts the position of the detected object in the next frame using a Kalman filter. ML models associated with identification techniques may be stored within a memory or accessible from a remote server. The deep sort technique then calculates the IOU between the predicted and actual position in the next frame for acquiring an analogy measure of two adjacent frames. In an embodiment, the subsequent identifier of the adjacent frame may be generated by a Hungarian matching technique. As illustrated in FIG. 1, the machine learning model assisted by the deep sort technique may be stored in the memory unit 105 or may be accessed from a remote server and is implemented by the processor 103 to identify a roller mount 101A from the roller mounts 101A, 101B, 101C, 101D, ..., 101N for selecting keyframes useful to determine the misalignment of the rollers 200 from the video feed of the roller-conveyor system 101.

FIG. 2B is a diagrammatic representation illustrating a keyframe selection of the roller mount 101A, according to an embodiment. The selection of a keyframe is one of the crucial steps for analysing the video feed to identify the object of interest. At the outset, two lines 201 are defined as the demarcation of a zone in which the keyframe capturing will be performed. The lines 201 is parallel to the y-axis of a video frame of the video feed and is given by equation (2).

$$(y2-y1)/(x2-x1) * (x-x1) = (y-y1) \quad (2)$$

where, (x1,y1) is the starting coordinate and (x2,y2) is the end coordinate of a given line. The coordinates (x,y) are defined as any point on the line. The point is declared to match with the midpoint coordinates of the bounding box (m1,n1) for initiation and termination of key frame capturing. In one example, the line 201 is drawn with respect to a frame size of the images captured by the image capturing device 102. Out of the two lines 201, the first line refers to a start point and a second line is the endpoint w.r.t to the frame size. Thereafter, the processing 103 may consider the bounding box of each idler to find the centroid to pass the two lines to take count and extract the keyframe.

In an embodiment, the processor 103 of the system 100 is also adapted to process each image, from the plurality of images, using an image processing technique to detect the at least one roller 200. Moreover, the processor 103 determines, for each processed image, a size of the at least one roller 200 and compares the size with respect to a predetermined value. After the keyframe extraction, the processor 103 may have predefined masks for each idler which then may train a Mask RCNN model to get the Region of the idlers. Further, the processor 103 may annotate the rollers and the saved keyframes to compute the mask area. The computed mask area may be defined as the threshold value. Consequently, the processor 103 selects the image, from the plurality of images, if the determined size of the at least one roller 200 is greater than the predetermined value.

Also, the processor 103 identifies the at least one roller 200 in the selected image and annotates the at least one roller 200 to determine a size and an orientation of the at least one roller 200. Furthermore, the processor 103 determines a deviation in the at least one of the size and the orientation of the at least one roller 200 with respect to a preset size and a preset orientation, the processor 103 employs the trained machine learning model to determine the deviation. The deviation can be either an angular deviation with respect to a reference place/axis in the image and a deviation can be interpreted as misalignment. Consequently, misalignment of the at least one roller 200 is identified based on the deviation. Further, the misalignment in at least one roller 200 is indicative of a misaligned state of the roller-conveyor system 101. The misaligned state can result in unwanted noise and vibrations in the roller-conveyer system 102 or damage to the pipe 202.

The processor 103, for the purpose of determining the deviation, may determine a first deviation between the determined size and the preset size and compare the first deviation with a first threshold value. In one example, the processor 103 after the detecting the bounding boxes, determines a principal axis of each bounding box and thereafter extracts the angle values with respect to the principal axis. The principal axis, in one embodiment, may be detected using Principal Component Analysis (PCA). The first threshold value is associated with the dimensions of the roller. Moreover, the processor 103 determines a second deviation between the determined orientation and the preset orientation and compares the second deviation with a second threshold value. The second threshold value is associated with the angular position of the roller. Consequently, the processor 103 determines that the at least one roller 200 is misaligned when at least one of the first deviation and the second deviation exceeds the first threshold value and the second threshold value, respectively.

In another embodiment, the processor 103 of the system 100 is adapted to receive a plurality of training images corresponding to each of the roller mounts 101A, 101B, 101C, 101D, ..., 101N. Furthermore, the processor 103 is adapted to process each of the plurality of training images to identify one or more rollers 200 using an image processing technique. Moreover, the processor 103 is adapted to annotate each identified roller 200 in each of the plurality of training images. The processor 103 is also adapted to determine a size and an orientation of each identified roller 200 based on the annotation. Consequently, the processor 103 trains the machine learning model based on the orientation and size of each identified roller 200 in the plurality of training images.

In another embodiment, the processor 103 of the system 100 is adapted to add a boundary box around each identified roller 200 in each of the plurality of training images, such that the training includes training the machine learning model based on the orientation and size of the boundary box of each identified roller 200 in the plurality of training images.

The processor 103 determines an orientation of each identified roller 200 by prediction of a binary mask for the identified roller 200. The mask prediction is carried out on the key frames extracted and saved during the first step by using trained weights of mask RCNN. The training is carried out post annotating the data by labelling it with the desired class. Mask RCNN initiates with a stage called Region Proposal Network (RPN) where the candidate object bounding boxes are proposed by the machine learning model. The next stage comprises feature extraction by applying the Region of Interest Pooling (RolPool) operation from each of the candidate boxes to carry out categorization and prediction of bounding-box offset. In one example, RolPool is a layer used for object detection tasks using convolutional neural networks. Under this technique, max pooling is performed on inputs of nonuniform sizes to obtain fixed-size feature maps. This technique takes two inputs: a feature map and a set of regions of interest (ROIs) that specify the locations of the objects in the frame. Simultaneously, in the second stage, the mask RCNN also predicts a binary mask for a region of interest (Rol).

During the training phase, a multi-task loss is defined on each sampled region of interest (Rol) as in equation (3).

$$L=Lcls+Lbox+Lmask \quad (3)$$

During the training phase, a multi-task loss is defined on each sampled region of interest (Rol) as in equation (3).

$$L=Lcls+Lbox+Lmask \quad (3)$$

Generally, a Mask R-CNN network has two sibling output layers. The first outputs a discrete probability distri_bution (per Rol), p = (p0, ... , pK), over K + 1 categories. As usual, p is computed by a softmax over the K+1 outputs of a fully connected layer. The second sibling layer outputs bounding-box regression offsets. We use the parameterization for tk, in which tk specifies a scale-invariant translation and log-space height/width shift relative to an object proposal. Each training Rol is labelled with a ground-truth class u and a ground-truth bounding-box regression target v. We use a multi-task loss L on each labelled Rol to jointly train for classification and bounding-box regression.

In one example, K binary masks including resolution m*m for each of the K classes result in a $Km^2$ - dimensional output for each Rol. The Lmask is defined as the average binary cross entropy loss by applying a per-pixel sigmoid to it. Lmask is only defined on the $k^{th}$ mask ignoring contribution from any other mask outputs for a Rol related to the ground-truth class K. Hence, the Lmask is generated without any class contest since it allows generation of mask by the network for all classes. There is a dedicated classification branch for the prediction of the classes essential for the selection of output mask which dissociates the class and mask prediction.

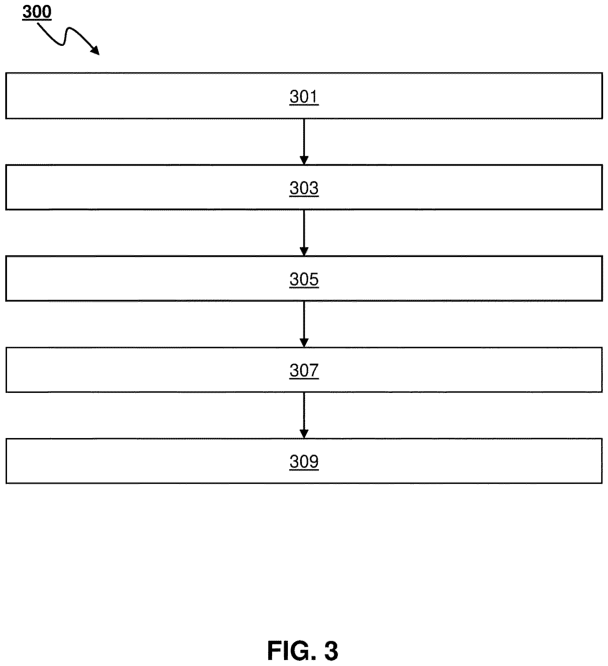

FIG. 3 is a process flowchart illustrating an exemplary method 300 for determining the state of the roller-conveyor system 101, according to an embodiment.

At Step 301, a plurality of images corresponding to a roller-mount 101A, 101B, 101C, 101D, ..., 101N of the roller-conveyor system 101 are received.

At Step 303, an image, from the plurality of images ( depicting at least one roller 200 mounted on the roller-mount 101A, 101B, 101C, 101D, ..., 101N in the image) is selected. In an embodiment, selecting the image includes processing each image, from the plurality of images, using an image processing technique to detect the at least one roller 200. Moreover, for each processed image, a size of the at least one roller 200 is determined and compared to the size with respect to a predetermined value. Consequently, the image is selected, from the plurality of images, if the determined size of the at least one roller 200 is greater than the predetermined value. In an embodiment, the method 300 includes processing a plurality of predetermined portions of the selected image corresponding to a known position of the at least one roller 200 in the image. Moreover, the method 300 includes checking presence of the at least one roller 200 in each of the plurality of predetermined portions.

At Step 305, the at least one roller 200 in the selected image is identified and annotated to determine a size and an orientation of the at least one roller 200.

At Step 307, a deviation in the at least one of the size and the orientation of the at least one roller 200 is determined with respect to a preset size and a preset orientation, respectively, in a trained machine learning model. In an embodiment, analysing the determined size and orientation of the at least one roller 200 includes determining a first deviation between the determined size and the preset size and comparing the first deviation with a first threshold value. Moreover, a second deviation is determined between the determined orientation and the preset orientation and comparing the second deviation with a second threshold value. Consequently, the at least one roller 200 is determined as misaligned when at least one of the first deviation and the second deviation exceeds the first threshold value and the second threshold value, respectively.

At Step 309, the misalignment of the at least one roller 200 may be identified based on the deviation, such that the misaligned at least one roller 200 is indicative of a misaligned state of the roller-conveyor system 101.

In an embodiment, the method 300 includes receiving a plurality of training images corresponding to a roller-mount 101A, 101B, 101C, 101D, ..., 101N. Moreover, the method 300 includes processing each of the plurality of training images to identify one or more rollers 200 using an image processing technique. Furthermore, the method 300 includes annotating each identified roller 200 in each of the plurality of training images. The method 300 also includes determining the size and an orientation of each identified roller 200 based on the annotation. Consequently, the machine learning model is trained based on the orientation and size of each identified roller 200 in the plurality of training images.

In an embodiment, annotating each identified roller 200 includes adding a boundary box around each identified roller 200 in each of the plurality of training images, such that the training includes training the machine learning model based on the orientation and size of the boundary box of each identified roller 200 in the plurality of training images. In an embodiment, determining the size includes determining a perimeter and an area of the boundary box. In an embodiment, determining the orientation includes identifying a principal axis of the boundary box and determining an angle of inclination of the principal axis with a reference axis. In an embodiment, determining the orientation further includes determining the position of the boundary box of the at least one roller 200 in the image. Consequently, the at least one roller 200 is categorized as one of an upper roller, a topside roller, a low-side roller, and a lower roller based on the position and the orientation of the boundary box.

The present disclosure also relates to a computer program product that may include instructions which when executed by a processing circuitry, such as a computer, cause the computer to perform the aforementioned method 300.

It is to be understood that the elements and features recited in the appended claims may be combined in different ways to produce new claims that likewise fall within the scope of the present disclosure. Thus, whereas the dependent claims appended below depend on only a single independent or dependent claim, it is to be understood that these dependent claims may, alternatively, be made to depend in the alternative from any preceding or following claim, whether independent or dependent and that such new combinations are to be understood as forming a part of the present specification.

While the present disclosure has been described above by reference to various embodiments, it may be understood that many changes and modifications may be made to the described embodiments. It is therefore intended that the foregoing description be regarded as illustrative rather than limiting and that it be understood that all equivalents and/or combinations of embodiments are intended to be included in this description.

List of Reference numerals:

| | | |
|---|---|---|
| 1. | System 100 | |
| 2. | Roller-mount 101a, 101b, 101c, 101d, ..., 101n | |
| 3. | Image capturing device 102 | |
| 4. | Processor 103 | |
| 5. | Communications network 104 | |
| 6. | Memory unit 105 | |
| 7. | Plurality of modules 106 | |
| 8. | Rollers 200 | |
| 9. | Pipe 202 | |
| 10. | Lines 201 | |
| 11. | Method 300 | |
| 12. | Step 301 | |
| 13. | Step 303 | |

14.  Step 305
15.  Step 307
16.  Step 309

**Claims**

1.  A method (300) for determining a state of a roller-conveyor system (101), the method (300) comprising:

    receiving a plurality of images corresponding to a roller-mount (101A, 101B, 101C, 101D, ..., 101N) of the roller-conveyor system (101);
    selecting an image, from the plurality of images, depicting at least one roller (200) mounted on the roller-mount (101A, 101B, 101C, 101D, ..., 101N) in the image;
    identifying the at least one roller (200) in the selected image and annotating the at least one roller (200) to determine a size and an orientation of the at least one roller (200);
    determining a deviation in the at least one of the size and the orientation of the at least one roller (200) with respect to a preset size and a preset orientation, respectively, in a trained machine learning model; and
    identifying misalignment of the at least one roller (200) based on the deviation, wherein the misaligned at least one roller (200) is indicative of a misaligned state of the roller-conveyor system (101).

2.  The method (300) as claimed in claim 1, wherein selecting the image comprises:

    processing each image, from the plurality of images, using an image processing technique to detect the at least one roller (200);
    determining, for each processed image, a size of the at least one roller 200 and comparing the size with respect to a predetermined value; and
    selecting the image, from the plurality of images, if the determined size of the at least one roller (200) is greater than the predetermined value.

3.  The method (300) as claimed in any one of claims 1-2, further comprising:

    processing a plurality of predetermined portions of the selected image corresponding to a known position of the at least one roller (200) in the image; and
    checking presence of the at least one roller (200) in each of the plurality of predetermined portions.

4.  The method (300) as claimed in any one of claims 1-3, wherein analysing the determined size and orientation of the at least one roller (200) comprises:

    determining a first deviation between the determined size and the preset size and comparing the first deviation with a first threshold value;
    determining a second deviation between the determined orientation and the preset orientation and comparing the second deviation with a second threshold value; and
    determining that the at least one roller (200) is misaligned when at least one of the first deviation and the second deviation exceeds the first threshold value and the second threshold value, respectively.

5.  The method (300) as claimed in any one of claims 1-4, further comprising:

    receiving a plurality of training images corresponding to a roller-mount (101A, 101B, 101C, 101D, ..., 101N);
    processing each of the plurality of training images to identify one or more rollers (200) using an image processing technique;
    annotating each identified roller (200) in each of the plurality of training images;
    determining a size and an orientation of each identified roller (200) based on the annotation; and
    training the machine learning model based on the orientation and size of each identified roller (200) in the plurality of training images.

6.  The method (300) as claimed in claim 5, wherein annotating each identified roller (200) comprises:

    adding a boundary box around each identified roller (200) in each of the plurality of training images,
    wherein the training comprises training the machine learning model based on the orientation and size of the boundary box of each identified roller (200) in the plurality of training images.

7.  The method (300) as claimed in claim 6, wherein determining the size includes determining a perimeter and an area of the boundary box.

8.  The method (300) as claimed in claim 6, wherein determining the orientation comprises:
    identifying a principal axis of the boundary box and determining an angle of inclination of the principal axis with a reference axis.

9.  The method (300) as claimed in claim 8, wherein determining the orientation further comprises:

    determining a position of the boundary box of the at least one roller (200) in the image; and categorizing the at least one roller (200) as one of an upper roller, a top-side roller, a low-side roller, and a lower roller based on the position and the orientation of the boundary box.

10. A system (100) for determining a state of a roller conveyer system, comprising:

an image capturing device (102) adapted to capture a plurality of images corresponding to a roller-mount (101A, 101B, 101C, 101D, ..., 101N) of the roller-conveyor system 101; and a processor (103) coupled to the image capturing device (102) and adapted to:

receive the plurality of images;
select an image, from the plurality of images, depicting at least one roller (200) mounted on the roller-mount (101A, 101B, 101C, 101D, ..., 101N) in the image;
identify the at least one roller (200) in the selected image and annotating the at least one roller (200) to determine a size and an orientation of the at least one roller (200);
determine a deviation in the at least one of the size and the orientation of the at least one roller (200) with respect to a preset size and a preset orientation, respectively, in a trained machine learning model; and
identify misalignment of the at least one roller (200) based on the deviation, wherein the misaligned at least one roller (200) is indicative of a misaligned state of the roller-conveyor system (101).

11. The system (100) as claimed in claim 10, wherein the processor (103) is adapted to:

process each image, from the plurality of images, using an image processing technique to detect the at least one roller (200);
determine, for each processed image, a size of the at least one roller (200) and compare the size with respect to a predetermined value; and
select the image, from the plurality of images, if the determined size of the at least one roller (200) is greater than the predetermined value.

12. The system (100) as claimed in any of claims 10-11, wherein the processor (103) is adapted to:

determine a first deviation between the determined size and the preset size and compare the first deviation with a first threshold value;
determine a second deviation between the determined orientation and the preset orientation and compare the second deviation with a second threshold value; and
determine that the at least one roller (200) is misaligned when at least one of the first deviation and the second deviation exceeds the first threshold value and the second threshold value, respectively.

13. The system (100) as claimed in claims 10-12, wherein the processor (103) is adapted to:

receive a plurality of training images corresponding to a roller mount (101A, 101B, 101C, 101D, ..., 101N);
process each of the plurality of training images to identify one or more rollers (200) using an image processing technique;
annotate each identified roller (200) in each of the plurality of training images;
determine a size and an orientation of each identified roller (200) based on the annotation; and
train the machine learning model based on the orientation and size of each identified roller (200) in the plurality of training images.

14. The system (100) as claimed in claim 13, wherein the processor (103) is adapted to:

add a boundary box around each identified roller (200) in each of the plurality of training images, wherein the training comprises training the machine learning model based on the orientation and size of the boundary box of each identified roller (200) in the plurality of training images.

15. The system (100) as claimed in claims 10-14, wherein the plurality of images is received in the form of a video feed.

16. A computer program product having program instructions for carrying out the method according to one of Claims 1-9.

FIG. 1A

FIG. 1B

FIG. 2B

FIG. 2A

300

```
┌─────────────────────────────────────────┐
│                   301                    │
└─────────────────────────────────────────┘
                     │
                     ▼
┌─────────────────────────────────────────┐
│                   303                    │
└─────────────────────────────────────────┘
                     │
                     ▼
┌─────────────────────────────────────────┐
│                   305                    │
└─────────────────────────────────────────┘
                     │
                     ▼
┌─────────────────────────────────────────┐
│                   307                    │
└─────────────────────────────────────────┘
                     │
                     ▼
┌─────────────────────────────────────────┐
│                   309                    │
└─────────────────────────────────────────┘
```

# FIG. 3

Europäisches
Patentamt
European
Patent Office
Office européen
des brevets

# EUROPEAN SEARCH REPORT

**Application Number**

EP 24 19 6006

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | Ppi: "Belt conveyor idler", , 31 December 2020 (2020-12-31), pages 1-8, XP093237044, Retrieved from the Internet: URL:https://www.ppi-global.com/userdocs/literature/ppi/documents/om_002-06_belt_conveyor_idler_instructions.pdf [retrieved on 2025-01-07] | 1,10,15, 16 | INV. B65G15/08 B65G43/00 B65G43/02 G05B19/418 G06V10/00 G05B9/00 |
| A | * page 1 - page 8 * | 2-9, 11-14 | |
| | ----- | | |
| Y | CN 115 973 715 A (CHINA COAL RES INST) 18 April 2023 (2023-04-18) | 1,10,15, 16 | |
| A | * claim 1 * * figures 1-7 * * paragraph [0001] - paragraph [0112] * | 2-9, 11-14 | |
| | ----- | | |
| A | CN 113 213 101 A (CR POWER TECH INSTITUTE CO LTD) 6 August 2021 (2021-08-06) * claim 1 * * figures 1-7 * * paragraph [0001] - paragraph [0097] * | 1-16 | |
| | ----- | | **TECHNICAL FIELDS SEARCHED (IPC)** |
| A | CN 115 285 621 A (CHANGZHOU HAITU INFORMATION TECH CO LTD) 4 November 2022 (2022-11-04) * claim 1 * * figures 1-3 * * paragraph [0001] - paragraph [0072] * | 1-16 | B65G G06V G05B |
| | ----- | | |

The present search report has been drawn up for all claims

| Place of search | Date of completion of the search | Examiner |
|---|---|---|
| The Hague | 8 January 2025 | Thibaut, Charles |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
...................................................................
& : member of the same patent family, corresponding
document

EPO FORM 1503 03.82 (P4C01)

## ANNEX TO THE EUROPEAN SEARCH REPORT
## ON EUROPEAN PATENT APPLICATION NO.

EP 24 19 6006

This annex lists the patent family members relating to the patent documents cited in  the above-mentioned European search report.
The members are as contained in the European Patent Office EDP file on
The European Patent Office is in no way liable for these particulars which are merely given for the purpose of information.

08-01-2025

| Patent document cited in search report | | Publication date | Patent family member(s) | Publication date |
|---|---|---|---|---|
| CN 115973715 | A | 18-04-2023 | NONE | |
| CN 113213101 | A | 06-08-2021 | NONE | |
| CN 115285621 | A | 04-11-2022 | NONE | |

EPO FORM P0459

For more details about this annex : see Official Journal of the European Patent Office, No. 12/82